# EUROPÄISCHE PATENTSCHRIFT

(11) **EP 0 342 405 B1**
(45) Veröffentlichungstag und Bekanntmachung des Hinweises auf die Patenterteilung: **03.02.1993**
(21) Anmeldenummer: 89107606.9
(22) Anmeldetag: 27.04.1989
(51) Int. Cl.: F16L 3/20, F16F 9/32

(54) **Hydraulische Stossbremse für Rohrleitungssysteme u.dgl.**
Hydraulic damper for pipeline systems and the like
Amortisseur hydraulique pour systèmes de conduites et équivalent

(30) Priorität: 19.05.1988 DE 3817058
(43) Veröffentlichungstag der Anmeldung: 23.11.1989
(73) Patentinhaber: LISEGA GMBH, D-27404 Zeven (DE)
(72) Erfinder: Hardtke, Hans Herlof, D-2730 Zeven (DE); Bernert, Jörg, D-2730 Zeven-Hofkoh (DE)
(74) Vertreter: Lippert, Hans-Joachim, Dipl.-Ing.

(56) Entgegenhaltungen:
- FR-A- 1 540 380
- GB-A- 687 013
- GB-A- 909 798

## Beschreibung

Die Erfindung bezieht sich auf eine hydraulische Stoßbremse für Rohrleitungssysteme u. dgl. mit einem in einem Druckzylinder verschiebbaren Kolben und mit Anschlußteilen an dem Zylinder und der Kolbenstange und mit einem Speicherraum für die in dem beiderseits des Kolbens vorhandenen Zylinderräumen befindliche Hydraulikflüssigkeit, bei dem in dem Kolben ein Hauptsteuerventil mit einem Ventilsitzkörper angeordnet ist, in dem zwei sich gegenüberstehende kolbenartige Ventilteile mit mindestens einer Drosselbohrung verschiebbar gelagert sind und unter Federkraft stehen, wobei mindestens eine der Umfangsflächen des Ventilsitzkörpers und der den Ventilsitzkörper aufnehmenden Bohrung mit ringsumlaufenden Nuten versehen ist.

Solche hydraulischen Stoßbremsen arbeiten in der Weise, daß einer langsamen Verlagerung der angeschlossenen Komponente, z.B. einer Rohrleitung, bei Temperaturveränderung ein Widerstand nicht entgegengesetzt wird. Bei ruckartigen Bewegungen aus unplanmäßigen Lastfällen blockiert die Stoßbremse und wird augenblicklich zur annähernd starren Verbindung. Bei Umkehrung der Bewegungsrichtung durch Gegenschwingung o. dgl. oder auch durch erneute Anregung erfolgt der Funktionsvorgang in der Gegenrichtung.

Bei langsamer Bewegung des Kolbens wird das in dem Kolben eingebaute Hauptsteuerventil durch Federkraft offengehalten, und die Hydraulikflüssigkeit kann ungehindert von einem Zylinderraum in den anderen strömen. Ein Volumenausgleich für die Kolbenstange und die Volumenänderung der Hydraulikflüssigkeit bei Temperaturänderung findet durch einen Speicherraum statt, der koaxial zu dem Zylinder angeordnet sein kann.

In der britischen PS 687 013 ist ein Vibrationsdämpfer beschrieben, der aus zwei teleskopartig zueinander verschiebbaren Hülsen besteht, wobei in der inneren Hülse ein Kolben verschiebbar gelagert ist, dessen Kolbenstange an der äußeren Hülse befestigt ist. Bei der bekannten Vorrichtung geht es darum, daß sowohl der Kolben als auch die Kolbenstange durch Dichtungen abgedichtet sind, die einerseits ein ausreichendes Dichthalten gewährleisten, andererseits keine zu hohe Reibung veranlassen. Hierzu ist am Umfang des Dichtungskörpers eine Reihe von Nuten vorgesehen, die parallel zueinander laufen und verhältnismäßig tief sind, so daß sich eine Art Labyrinthpackung ergibt. Die Profile der Nuten können verschieden gestaltet sein, z.B. im Querschnitt, keilförmig oder U-förmig. Das Packungsmaterial liegt hierbei nur mit den zwischen den parallel verlaufenden Nuten verbleibenden Stegen an der Innenwand der Hülse oder der Kolbenstange an. Eine Verbindung der Nuten nach außen ist nicht vorgesehen.

Aus der französischen PS 1540380 ist ein Kolben für eine Stoßdämpfervorrichtung zu entnehmen, der im Ganzen aus elastischem Material besteht und an der Umfangfläche eine oder mehrere Nuten aufweist, um eine Schmierung der Reibungsfläche durch das hydraulische Medium zu erreichen. Da der Kolben im Ganzen aus elastischem Material besteht, kann bei der Bremswirkung der freie Querschnitt der Nuten sich verringern, wodurch die Reibwirkung erhöht wird. Die Nut kann an der Umfangsfläche des elastischen Dichtungskörpers einen Schraubenlinienverlauf haben.

Die Steuerventile bei den Stoßbremsen gehören zu dem funktionswichtigsten Teil derselben, weil von dem einwandfreien Funktionieren des Steuerventils die Sicherheit und Zuverlässigkeit der Stoßbremsen abhängt. Wenn ein Ventil festhängt, ist die Arbeitsweise der Stoßbremse beeinträchtigt und damit auch den an der Stoßbremse hängenden Last z.B. der Rohrleitung. Man hat schon versucht, dadurch Abhilfe zu leisten, daß eine verhältnismäßig enge Bohrung an dem kolbenartigen Ventilteil vorgesehen wurde, vor der ein Filter angeordnet ist. Hierbei ist nicht zu verhindern, daß die Bohrung sich mit der Zeit zusetzen kann, so daß der gewünschte Erfolg vereitelt wurde. Die Verwendung eines Filters erfordert eine verhältnismäßig große Abmessung in radialer Richtung für die kolbenartigen Ventilteile und damit für die Ventilsitzkörper und zugleich den Kolben, was sich auf das gesamte Bauvolumen der Stoßbremse auswirkt.

Er hat sich herausgestellt, daß man dieser Schwierigkeiten durch eine andere Maßnahme in einfacher Weise leicht Herr werden kann. Die Erfindung zeichnet sich bei einer Stoßbremse der anfangs genannten Art dadurch aus, daß durch die Nuten ein Bypass am Ventilsitzkörper gebildet wird.

Es hat sich ergeben, daß durch diese Maßnahmen eine ungestörte Funktionstüchtigkeit der Stoßbremse erreicht werden kann. Ein ungewolltes Verharren der Ventilteile in der Blockierstellung wird ausgeschlossen. Das Bypass-System an dem Hauptsteuerventil verhindert ein Festhängen der Ventilteile und gestattet einen sanften Nachlauf bei anhaltender Kraft. Es wird für einen raschen Druckausgleich in beiden Zylinderkammern gesorgt, so daß sich die Ventile in der betreffenden Stellung der Stoßbremse mit Sicherheit öffnen. Zugleich führt die erfindungsgemäße Maßnahnme zu dem weiteren Vorteil, daß die Abmessungen des Hauptsteuerventils verhältnismäßig klein, jedenfalls kleiner als bisher bei gleicher Leistung kleinere Abmessungen erhalten kann.

Vorteilhaft verläuft die Nut an der Umfangsfläche des Ventilsitzkörpers oder auch der zugehörigen Bohrung schraubenlinienförmig über die Länge der Bohrung bzw. des Ventilsitzkörpers. Ein Zusetzen dieses Durchgangs von einer Zylinderkammer zu der anderen tritt nicht mehr ein. Das Steuerventil geht in die Lage zurück, die dem Lastfall entspricht. Ein Verharren der Ventilteile in der Blockierstellung trifft nicht mehr ein.

Nach einem weiteren Merkmal der Erfindung ist die Nut im Querschnitt mit spitzem Winkel nach außen offen ausgebildet.

Die Erfindung wird anhand einer in der Zeichnung dargestellten Ausführungsform der Erfindung nachstehend erläutert.

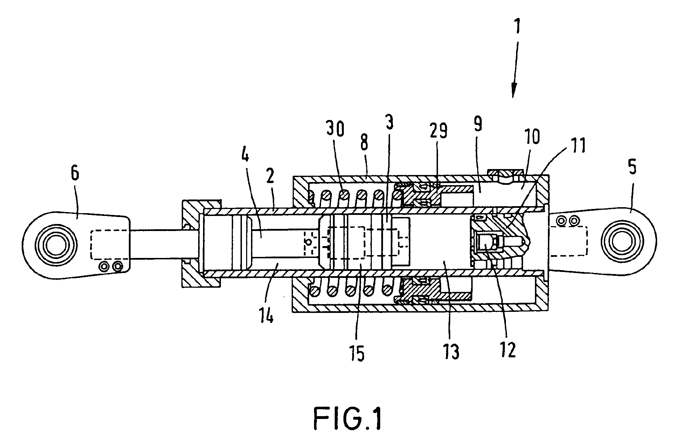

Fig. 1 zeigt eine Übersicht über die der Erfindung zu Grunde liegende Stoßbremse im Längsschnitt und im Schema.

Fig. 2 stellt den Kolben der Stoßbremse im größeren Maßstab mit der erfindungsgemäßen Maßnahme schematisch dar.

Die Stoßbremse 1 weist einen Zylinder 2 auf, in dem ein Kolben 3 mit Kolbenstange 4 verschiebbar gelagert ist. Die Anschlußteile 5 und 6 der Stoßbremse sind einerseits mit dem Zylinder 2 und andererseits mit der Kolbenstange 4 fest verbunden.

Der Zylinder 2 ist von einem Gehäuse 8 umgeben, in dem ein Speicherraum 9 für die Hydraulikflüssigkeit 10 vorhanden ist. Von dem Speicherraum 9 führt eine Leitung 11 über ein Ausgleichsventil 12 zu der vorderen Zylinderkammer 13. Zwischen dieser Kammer 13 und der hinteren Zylinderkammer 14 ist in dem Kolben 3 ein Hauptsteuerventil 15 angeordnet.

Das Hauptsteuerventil 15 weist einen Ventilsitzkörper 17 auf, in welchem die kolbenartigen Ventilteile 18 und 19 verschiebbar angeordnet sind. Zwischen diesen Teilen 18 und 19 befindet sich eine Druckfeder 20. Die kolbenartigen Ventilteile 18 und 19 sind mit Durchgangsbohrungen 21 und 22 versehen. Der Kolben 3 weist die Kolbendichtungsringe 23 und 24 auf. Eine zentrale Bohrung 26 führt über die Querbohrung 27 zu der hinteren Zylinderkammer 14, während die Durchlaßöffnung 28 Verbindung mit der vorderen Ventilkammer 13 hat. Die Hydraulikflüssigkeit in dem Speicherraum 10 steht mittels des Kolbens 29 mit der Federung 30 stets unter Druck.

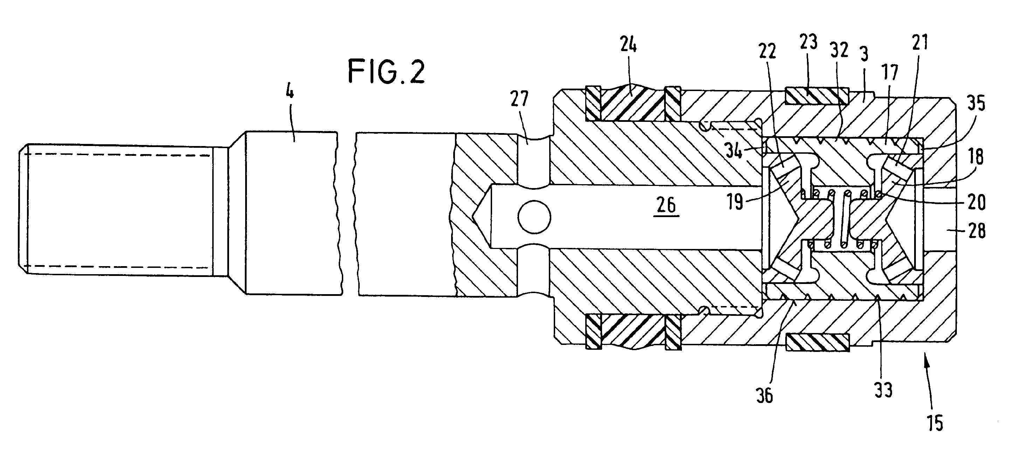

Bei dem Beispiel der Figur 2 ist die Umfangsfläche 32 des Ventilsitzkörpers 17 mit einer Nut 33 versehen, die bevorzugt schraubenlinienförmig an der Umfangsfläche 32 geführt ist. An den Stirnseiten des Ventilsitzkörpers 17 sind Radialschlitze 34, 35 vorgesehen.

Die schraubenlinienförmig verlaufende Nut 33 stellt einen Bypass zwischen der vorderen Zylinderkammer 13 und der hinteren Zylinderkammer 14 dar, der stets offen ist und ermöglicht, daß bei eventueller Blockierstellung des Hauptsteuerventils ein Druckausgleich zwischen den beiden Zylinderkammern erfolgen kann, wodurch ein Öffnen der kolbenartigen Ventilteile bei eventuellem Festhängen o.dgl. ermöglicht wird.

Die Nut 33 weist im Querschnitt vorteilhaft einen spitzen Winkel auf, der sich nach außen öffnet. Eine entsprechende Nut kann auch in der Bohrung 36 vorgesehen sein, die den Ventilsitzkörper 17 aufnimmt. Ferner ist es möglich, das sowohl am Außenumfang des Ventilsitzkörpers 17 als auch an der Bohrung 36, die den Ventilsitzköprer 17 aufnimmt, schraubenlinienförmige Nuten angeordnet werden, die sich jedoch nicht überdecken sollen. Es reicht aus, wenn die Nut eine Tiefe von etwa 0,2 bis 0,3 mm besitzt. Der spitze Winkel der Nut kann etwa 60° betragen.

## Patentansprüche

1. Hydraulische Stoßbremse (1) für Rohrleitungssysteme und dgl. mit einem in einem Durckzylinder (2) verschiebbaren Kolben (3) und mit Anschlußteilen (5, 6) an dem Zylinder (2) und der Kolbenstange (4) und mit einem Speicherraum (9) für die in dem beiderseits des Kolbens (3) vorhandenen Zylinderräumen (13, 14) befindliche Hydraulikflüssigkeit, bei dem in dem Kolben (3) ein Hauptsteuerventil (15) mit einem Ventil des Körpers (17) angeordnet ist, in welchem zwei sich gegenüberstehende kolbenartige Ventilteile (18, 19) mit mindestens einer Durchgangsbohrung (21, 22) verschiebbar gelagert sind und unter Federkraft (20) stehen, wobei mindestens eine der Umfangsflächen (32, 36) des Ventilsitzkörpers (17) und der den Ventilsitzkörper aufnehmenden Bohrung (36) mit ringsumlaufenden Nuten (33) versehen ist, **dadurch gekennzeichnet,** daß durch die Nuten (33) ein Bypass am Ventilsitzkörper (17) gebildet wird.

2. Hydraulische Stoßbremse nach Anspruch 1, **dadurch gekennzeichnet**, daß die Nut (33) schraubenlinienförmig verläuft und daß an den Stirnseiten des Ventilsitzkörpers (17) radiale Schlitze (34, 35) angeordnet sind.

3. Hydraulische Stoßbremsen nach Anspruch 1 oder 2, **dadurch gekennzeichnet,** daß die Nut (33) im Querschnitt mit spitzem Winkel und nach außen offen ausgebildet ist.

## Claims

1. Hydraulic damper (1) for pipeline systems and the like having a piston (3) which is displaceable in a pressurised cylinder (2) and with parts (5, 6) for connection to the cylinder (2) and the piston rod (4), and with a chamber (9) for the hydraulic fluid located in the cylinder chambers (13, 14) on either side of the piston (3), wherein a main control valve (15) with a valve seat body (17) is disposed in the piston (3), in which valve seat body two opposite, piston-like valve parts (18, 19) are displaceably mounted with at least one continuous bore (21, 22) and are subject to spring force (20), at least one of the peripheral surfaces (32, 36) of the valve seat body (17) and the bore (36) accommodating the valve seat body being provided with peripheral grooves (33), characterised in that the grooves (33) form a bypass on the valve seat body (17).

2. Hydraulic damper according to Claim 1, characterised in that the groove (33) is helical; and in that radial slots (34, 35) are disposed on the front ends of the valve seat body (17).

3. Hydraulic dampers according to Claim 1 or 2, characterised in that the cross-section of the groove (33) has an acuate angle and is open on the exterior.

## Revendications

1. Amortisseur hydraulique (1) pour systèmes de canalisations ou similaires, comportant un piston (3) mobile dans un cylindre de vérin hydraulique (2) et des éléments de raccordement (5, 6) au cylindre (2) et à la tige de piston (4), ainsi qu'une chambre réservoir (9) pour le liquide hydraulique qui se trouve dans les chambres de cylindre (13, 14) situées de part et d'autre du piston (3), amortisseur dans lequel il est disposé, dans le piston (3), une valve de commande principale (15) comprenant un corps à sièges de soupape (17) dans lequel deux éléments de valve (18, 19), semblables à des pistons, se faisant face et présentant au moins une forure traversante (21, 22), sont montés mobiles et sont sollicités par la force d'un ressort (20), l'une au moins des surfaces circonférentielles (32, 36) du corps à sièges de soupape (17) et de la forure (36) qui reçoit le corps à sièges de soupape étant munie de gorges circonférentielles annulaires (33), caractérisé en ce qu'une dérivation au niveau du corps à sièges de soupape (17) est formée par les gorges (33).

2. Amortisseur hydraulique selon la revendication 1, caractérisé en ce que la gorge (33) s'étend en forme d'hélice et en ce que des fentes radiales (34, 35) sont ménagées sur les côtés frontaux du corps à sièges de soupape (17).

3. Amortisseur hydraulique selon la revendication 1 ou 2, caractérisé en ce que la gorge (33) est réalisée avec, en coupe transversale, une forme en angle aigu s'ouvrant vers l'extérieur.
